# EUROPEAN PATENT APPLICATION

(11) **EP 4 656 772 A1**
(43) Date of publication of application: **03.12.2025**
(21) Application number: 24218358.0
(22) Date of filing: 09.12.2024
(51) Int. Cl.: C25B 1/04, C25B 9/23, C25B 9/77, C25B 11/032

(54) **WATER ELECTROLYSIS MEMBRANE ELECTRODE, METHOD FOR PREPARING THE SAME, AND WATER ELECTROLYZER APPLYING THE SAME**

(30) Priority: 28.05.2024 CN 202410677366
(71) Applicant: EVE Hydrogen Energy Co., LTD., Huizhou, Guangdong 516006 (CN)
(72) Inventor: PAN, Qiuren, Huizhou, Guangdong, 516006 (CN); YIN, Zhenglei, Huizhou, Guangdong, 516006 (CN); WANG, Ying, Huizhou, Guangdong, 516006 (CN); LIU, Jincheng, Huizhou, Guangdong, 516006 (CN)
(74) Representative: Herrero & Asociados, S.L.

(57) **Abstract**

The present disclosure provides a water electrolysis membrane electrode, a method for preparing the water electrolysis membrane electrode, and a water electrolyzer applying the water electrolysis membrane electrode. The water electrolysis membrane electrode includes a cathode gas diffusion layer, a cathode catalytic layer, an anion exchange membrane, a hydrophobic anode catalytic layer, and an anode gas diffusion layer that are stacked in sequence. Raw materials for preparing the hydrophobic anode catalytic layer include an anode catalyst, a hydrophobic material, and an anode ionomer. A mass ratio of the anode catalyst, the hydrophobic material, and the anode ionomer is 10:1-3:1-3. A porosity of the hydrophobic anode catalytic layer is 10%-40%.

## Description

### TECHNICAL FIELD

The present disclosure belongs to the technical field of water electrolysis hydrogen production, and particularly relates to a water electrolysis membrane electrode, a method for preparing the water electrolysis membrane electrode, and a water electrolyzer applying the water electrolysis membrane electrode.

### BACKGROUND

Anion exchange membrane water electrolysis (AEMWE) technology is a new type water electrolysis technology taking an anion exchange membrane as a diaphragm, which combines low cost of alkaline water electrolysis technology and advantages of proton exchange membrane water electrolysis (PEMWE) technology such as faster response speed and higher current density. The membrane electrode is a core component of the AEMWE technology, including a gas diffusion layer, a catalytic layer, and an anion exchange membrane, and is also a main place for hydrogen and oxygen production.

However, for current commercially available AEMWE electrolyzers, liquid supply circulation on both anode and cathode sides is adopted, which is not conducive to obtaining relatively dry hydrogen, and in this way, a gas liquid separation module on the cathode side is required, and a water removal module needs to be added to a subsequent purification device, thus significantly increasing a hydrogen production cost. In order to further obtain dry hydrogen and reduce a cost of a hydrogen production system, liquid supply circulation on the anode side of the AEMWE electrolyzer can be adopted. The principle is that reactant water molecules move from the anode side to the cathode side through permeating the anion exchange membrane, and the permeating water molecules can participate in a hydrogen reduction reaction. In this way, the produced hydrogen carries less moisture, and the gas liquid separation device and the hydrogen production cost can be reduced. However, since there is no electrolyte circulation on the cathode side, firstly, a lack of water causes a dry-wet state change of the diaphragm and diaphragm deformation, resulting in mechanical damage to the diaphragm and poor long-term stability. Furthermore, excessive permeating water makes it impossible to obtain relatively dry hydrogen.

Therefore, for the purpose of reducing the hydrogen production cost, it is necessary to seek a water electrolysis membrane electrode that applies the liquid supply circulation on the anode side and can efficiently produce dry hydrogen.

### SUMMARY

The purpose of the present disclosure is to provide a water electrolysis membrane electrode, a method for preparing the water electrolysis membrane electrode, and a water electrolyzer applying the water electrolysis membrane electrode. A water electrolysis device with liquid supply circulation on an anode side applying the water electrolysis membrane electrode can efficiently produce dry hydrogen, reduce a gas liquid separation module on the cathode side, reduce a frequency of switching to a hydrogen water removal device, reduce a hydrogen production cost, and can significantly promote a large-scale development of anion exchange membrane water electrolyzers (AEMWE).

**In** a first aspect of the present disclosure, a water electrolysis membrane electrode is provided. The water electrolysis membrane electrode includes a cathode gas diffusion layer, a cathode catalytic layer, an anion exchange membrane, a hydrophobic anode catalytic layer, and an anode gas diffusion layer. The cathode gas diffusion layer, the cathode catalytic layer, the anion exchange membrane, the hydrophobic anode catalytic layer, and the anode gas diffusion layer are stacked in sequence. Raw materials for preparing the hydrophobic anode catalytic layer include an anode catalyst, a hydrophobic material, and an anode ionomer. A mass ratio of the anode catalyst, the hydrophobic material, and the anode ionomer is 10:1-3:1-3. A porosity of the hydrophobic anode catalytic layer is 10%-40%.

**The** liquid supply circulation of most AEM water electrolyzers on the market is carried out on both the anode and cathode sides. In this liquid supply circulation mode, water molecules obtain electrons on the cathode side and undergo a reduction reaction to generate hydroxide ions and hydrogen. Then, the hydroxide ions move to the anode side through the anion exchange membrane and participate in an oxygen-evolution reaction to generate water and oxygen. Due to a high content of water molecules on the cathode side, the produced hydrogen may carry a large amount of water vapor, which not only affects the purity of hydrogen but also requires an additional water removal module and frequent switching to a hydrogen water removal and purification device, resulting in an increase in the hydrogen production cost. However, the water electrolysis membrane electrode provided in the present disclosure can achieve the liquid supply circulation on the anode side, produce relatively dry hydrogen, and reduce the frequency of switching to the hydrogen water removal and purification device and the hydrogen production cost, thereby being able to greatly promote the large-scale development of anion exchange membrane water electrolyzers (AEMWE). In the liquid-supply circulation on the anode side, firstly, raw water is supplied on the anode side of the water electrolysis membrane electrode. Based on the hydrophobicity of the hydrophobic anode catalytic layer, a permeation amount of water molecules through the hydrophobic anode catalytic layer can be regulated. Water molecules permeate from the hydrophobic anode catalytic layer to the cathode catalytic layer through the anion exchange membrane, and then participate in the hydrogen-reduction reaction on the cathode side. By adjusting a feeding amount of polytetrafluoroethylene in the hydrophobic anode catalytic layer, the permeation amount of water molecules is controlled such that the produced hydrogen carries less moisture.

The inventors have found that when the liquid supply circulation on the anode side is adopted, the oxygen generated by a conventional anode catalytic layer has problems of slow transmission and mass-transfer hindrance in an electrolyte, and water molecules need to permeate from the anode gas diffusion layer, through the anode catalytic layer, and then to the cathode catalytic layer. Moreover, when the conventional anode catalytic layer is adopted, during the liquid supply circulation on the anode side, it is likely to cause an excessive amount of water molecules permeating into the anion exchange membrane by sequentially permeating from the anode gas diffusion layer and the anode catalytic layer, resulting in excessive water content on the cathode side and excessive water carried by hydrogen on the cathode side. In the present disclosure, a raw material ratio of the hydrophobic anode catalytic layer is adjusted to balance the hydrophilicity and hydrophobicity of the hydrophobic anode catalytic layer, and the porosity of the hydrophobic anode catalytic layer is adjusted to be 10%-40%, so as to accelerate the gas mass-transfer rate and expose more active sites while slowing down water molecules permeating into the hydrophobic anode catalytic layer. In addition, the anode ionomer can not only serve as a binder in the hydrophobic anode catalytic layer, but also play a role in gas transmission and OH- transport. If the hydrophobicity of the hydrophobic anode catalytic layer is too low, the oxygen mass-transfer efficiency on the anode side is low, and the water content on the cathode side is relatively high, thus the produced hydrogen is likely to carry water molecules, thereby increasing the hydrogen production cost of the water electrolyzer. If the hydrophobicity of the hydrophobic anode catalytic layer is too strong, remaining water molecules on the cathode side are less, which may affect ion conduction and is not conducive to efficient and long-term stable hydrogen production.

**In** some embodiments, a contact angle of the hydrophobic anode catalytic layer is greater than 90°.

In some embodiments, the hydrophobic material includes at least one selected from the group consisting of polytetrafluoroethylene (PTFE), polyvinylidene fluoride (PVDF), and perfluoroethylene-propylene copolymer (FEP).

Particularly, the hydrophobic material includes polytetrafluoroethylene.

In some embodiments, in the raw materials for preparing the hydrophobic anode catalytic layer, the mass ratio of the anode catalyst, polytetrafluoroethylene, and the anode ionomeris10:1.5:1.5.

In some embodiments, the anode ionomer includes at least one selected from Alkymer ionomer, Fumasep ionomer, Ionomr ionomer, Versogen ionomer, and Sustainion ionomer. Particularly, the anode ionomer includes Alkymer ionomer.

In some embodiments, the porosity of the hydrophobic anode catalytic layer is 20%-30%. When the porosity of the hydrophobic anode catalytic layer is 20%-30%, the hydrophobic anode catalytic layer has many catalytic active sites, enabling generated oxygen bubbles to be discharged timely and improving the oxygen transmission efficiency; additionally, the hydrophobic anode catalytic layer is enabled to have a stable structure, thus slowing down the catalytic layer structure collapsing and prolonging a stable operation time of the water electrolysis device.

In some embodiments, a method for preparing the hydrophobic anode catalytic layer includes: mixing the raw materials for preparing the hydrophobic anode catalytic layer to obtain an anode catalytic layer slurry, applying the anode catalytic layer slurry on a side of the anode gas diffusion layer, and calcining the anode catalytic layer slurry on the side of the anode gas diffusion layer at a temperature of 300°C-500°C to produce the hydrophobic anode catalytic layer. Since polytetrafluoroethylene can melt in a high-temperature environment to disperse in the catalytic layer, a ratio of polytetrafluoroethylene to the anode catalyst in the hydrophobic anode catalytic layer actually prepared by the above-mentioned CCS (catalyst coated substrate) method is close to a preset ratio while feeding, thereby realizing the regulation of the hydrophobicity and pore structure of the hydrophobic anode catalytic layer and accelerating oxygen mass transfer. It should be noted that, the CCS method refers to a method of first applying a catalyst active composition on a surface of the gas diffusion layer to prepare a hydrophobic anode catalytic layer, and then attaching the hydrophobic anode catalytic layer to the anion exchange membrane to produce the water electrolysis membrane electrode.

**In** some embodiments, in the preparation of the hydrophobic anode catalytic layer, a heating rate is 5 °C/min.

In some embodiments, in the preparation of the hydrophobic anode catalytic layer, a holding temperature is 350 °C and a holding time is 30 minutes.

In some embodiments, the anode catalytic layer slurry is held at a constant temperature in an inert gas atmosphere. The inert gas includes nitrogen, argon or helium. Particularly, the inert gas includes nitrogen.

In some embodiments, in the anode catalytic layer slurry, a concentration of the anode catalyst is 10 mg/mL-30 mg/mL. Particularly, in the anode catalytic layer slurry, the concentration of the anode catalyst is 20 mg/mL.

In some embodiments, the raw materials for preparing the hydrophobic anode catalytic layer further include a solvent, and the solvent include at least one of ethanol and water. Particularly, the solvent is a mixed solution of ethanol and water, and a volume ratio of ethanol to water is 1:1.

**In** some embodiments, in the hydrophobic anode catalytic layer, a loading of the anode catalyst is 1 mg/cm²-10 mg/cm². The anode catalyst includes at least one selected from iridium dioxide (IrO₂), ruthenium dioxide (RuO₂), a nickel-iron layered double hydroxide (NiFe LDH), a nickel-iron oxide (NiFe₂Oₓ), a nickel-iron alloy, and a nickel-iron-cobalt alloy.

By adjusting the loading of the anode catalyst, a content of the hydrophobic material in the hydrophobic anode catalytic layer can be adjusted, thus the hydrophobicity of the hydrophobic anode catalytic layer can be regulated. When the loading of the anode catalyst falls within the above-mentioned range, the produced hydrophobic anode catalytic layer has excellent catalytic performance.

**In** some embodiments, the anode catalyst is the nickel-iron layered double hydroxide.

In some embodiments, in the hydrophobic anode catalytic layer, the loading of the anode catalyst is 5 mg/cm².

In some embodiments, raw materials for preparing the cathode catalytic layer include a cathode catalyst, a hydrophilic carbon material, and a cathode ionomer. A mass ratio of the cathode catalyst, the hydrophilic carbon material, and the cathode ionomer is 8:2-6:1-5. Introducing the hydrophilic carbon material into the cathode catalytic layer and adjusting the mass ratio of the hydrophilic carbon material to the cathode catalyst can improve the hydrophilicity and water retaining capacity of the cathode catalytic layer, enable the reactants on the cathode side to have sufficient water, enhance structural stability of the cathode catalytic layer during an operation of the water electrolysis membrane electrode, and reduce the water carried by hydrogen. Combining the hydrophilic cathode catalytic layer with the hydrophobic anode catalytic layer can regulate an amount of water molecules permeating from the anode side to the cathode side, which is conducive to the liquid supply circulation on the anode side of the water electrolyzer and reduce the water vapor in the produced hydrogen.

In some embodiments, in the raw materials for preparing the cathode catalytic layer, a mass ratio of the cathode catalyst, the hydrophilic carbon material, and the cathode ionomer is 8:4:2.

In some embodiments, the cathode ionomer includes at least one selected from the group consisting of Alkymer ionomer, Fumasep ionomer, Ionomr ionomer, Versogen ionomer, and Sustainion ionomer. Particularly, the cathode ionomer includes Alkymer ionomer.

In some embodiments, the hydrophilic carbon material includes at least one of a carboxylated carbon material and an aminated carbon material. For example, the hydrophilic carbon material comprises at least one selected from the group consisting of carboxylated carbon nanotubes, carboxylated graphene, carboxylated carbon black, carboxylated carbon spheres, carboxylated carbon fibers, hydroxylated carbon nanotubes, hydroxylated graphene, hydroxylated carbon black, hydroxylated carbon spheres, hydroxylated carbon fibers, aminated carbon nanotubes, aminated graphene, aminated carbon black, aminated carbon spheres, and aminated carbon fibers.

In some embodiments, the hydrophilic carbon material includes the carboxylated carbon material. Compared with other hydrophilic carbon materials, the carboxylated carbon material has strong hydrophilicity, which can retain the water molecules that permeate to the cathode side, ensure that the cathode catalytic layer and the anion exchange membrane can keep moist, reduce probability of swelling and shrinking of related membranes or layers, thereby preventing alternation between dry and wet states during cycling from affecting electrochemical performance and stability of the water electrolyzer. Moreover, introducing the carboxylated carbon material into the cathode catalytic layer can improve an adhesion between the cathode catalytic layer and the anion exchange membrane, and stability and electrochemical performance of the water electrolysis membrane electrode can be improved based on the conductive property of the carboxylated carbon material.

**In** some embodiments, the hydrophilic carbon material includes the carboxylated carbon nanotubes. The carboxylated carbon nanotubes have high electrical conductivity and can reduce an ohmic impedance. Therefore, when the carboxylated carbon nanotubes are served as the hydrophilic carbon material, an ohmic impedance of the cathode catalytic layer can be reduced, thereby enhancing performance of the cathode catalytic layer. In addition, the carboxylated carbon nanotubes are one-dimensional materials, in the preparation of the cathode catalytic layer, the carboxylated carbon nanotubes can be interconnected with the cathode ionomer and the cathode catalyst to jointly form a three-dimensional network structure, thereby regulating the hydrophilicity and pore structure of the cathode catalytic layer and enhancing the catalytic effect of the cathode catalytic layer.

In some embodiments, a method for preparing the cathode catalytic layer includes: homogeneously mixing the raw materials for preparing the cathode catalytic layer to obtain a cathode catalytic layer slurry, and applying the cathode catalytic layer slurry on a side of the anion exchange membrane to produce the cathode catalytic layer. The cathode catalytic layer is prepared by means of the above-mentioned CCM (catalyst coated membrane) method, and the anion exchange membrane is used as a supporting substrate, which can reduce a contact resistance between the cathode catalytic layer and the anion exchange membrane and improve the electrochemical performance of the water electrolysis membrane electrode. It is noted that, the CCM method refers to a method of first applying a catalyst active composition on a surface of the anion exchange membrane to obtain the cathode catalytic layer, and then attaching the cathode catalytic layer to the cathode gas diffusion layer to obtain the water electrolysis membrane electrode.

In some embodiments, in the preparation of the cathode catalytic layer slurry, the cathode catalytic layer slurry is homogeneously mixed by means of s high-speed shearing. A shearing rate is 500 rpm-20,000 rpm, a mixing duration is 10 min-90 min, and a shearing temperature is less than 5°C. Particularly, the shearing rate is 10,000 rpm, and the mixing duration is 30 min.

In some embodiments, in the preparation of the cathode catalytic layer slurry, the raw materials for preparing the cathode catalytic layer are homogeneously mixed by means of an ultrasonic dispersion. An ultrasonic power is 50 W-150 W, and a duration is 10 min-90 min. Particularly, the ultrasonic power is 100 W, and the duration is 30 min.

In some embodiments, the cathode catalytic layer slurry is applied by means of coating, spraying, or screen printing.

In some embodiments, in the cathode catalytic layer slurry, a concentration of the cathode catalyst is 10 mg/mL-30 mg/mL. Particularly, in the cathode catalytic layer slurry, the concentration of the cathode catalyst is 20 mg/mL.

In some embodiments, the raw materials for preparing the cathode catalytic layer further include a solvent. The solvent includes at least one of ethanol and water. Particularly, the solvent is a mixed solution of ethanol and water, and a volume ratio of ethanol to water is 1:1.

**In** some embodiments, in the cathode catalytic layer, a loading of the cathode catalyst is 1 mg/cm²-10 mg/cm². The cathode catalyst includes at least one selected from the group consisting of a platinum-carbon catalyst (Pt/C), a nickel-phosphorus catalyst (NiP), a nickel-molybdenum alloy (NiMo alloy), a nickel-manganese alloy (NiMn alloy), a nickel-molybdenum oxide (NiMo oxide), a nickel-manganese oxide (NiMn oxide), and molybdenum disulfide (MoS₂).

In some embodiments, the cathode catalyst is molybdenum disulfide, and in the cathode catalytic layer, the loading of the cathode catalyst is 5 mg/cm².

**In** some embodiments, a thickness of the anion exchange membrane is 20 µm-100 µm. Particularly, the thickness of the anion exchange membrane is 75 µm.

**In** a second aspect of the present disclosure, a method for preparing the above-mentioned water electrolysis membrane electrode is provided. The method includes the following operations: stacking the cathode gas diffusion layer, the cathode catalytic layer, the anion exchange membrane, the hydrophobic anode catalytic layer, and the anode gas diffusion layer sequentially to obtain a layer assembly; performing a hot pressing on the layer assembly under a pressure of 100 psi-600 psi at a temperature of 50°C-150°C to produce the water electrolysis membrane electrode.

In a third aspect of the present disclosure, a water electrolyzer is provided. The water electrolyzer includes the above-mentioned water electrolysis membrane electrode. The water electrolyzer provided by the present disclosure includes the above-mentioned water electrolysis membrane electrode, which can efficiently produce dry hydrogen, optimize the post treatment operation of hydrogen production, reduce the hydrogen production cost, and is expected to bring a breakthrough change for large-scale electrolytic hydrogen production based on renewable energy.

### DETAILED DESCRIPTION

In order to enable those skilled in the art to better understand the technical solutions in the present disclosure, the following will clearly and completely describe the technical solutions of the present disclosure in combination with the embodiments of the present disclosure. Obviously, the described embodiments are only a part of the embodiments of the present disclosure, not all of them. Based on the embodiments in the present disclosure, all other embodiments obtained by ordinary skilled in the art without creative work should fall within the protection scope of the present disclosure.

### Example 1

### (1) Preparation of Hydrophobic Anode Catalytic Layer

Raw materials for preparing the hydrophobic anode catalytic layer included an anode catalyst, polytetrafluoroethylene, an anode ionomer, and a solvent. The anode catalyst was a nickel-iron layered double hydroxide (NiFe LDH), the anode ionomer was Alkymer ionomer, and the solvent was a mixed solution of ethanol and water. A volume ratio of ethanol to water was 1:1. A mass ratio of the anode catalyst, polytetrafluoroethylene, and the anode ionomer was 10:1.5:1.5.

A method for preparing the hydrophobic anode catalytic layer included the following operations.

The raw materials for preparing the above-mentioned hydrophobic anode catalytic layer were homogeneously mixed to obtain an anode catalytic layer slurry. By adjusting an amount of the solvent, a concentration of the anode catalyst in the anode catalytic layer slurry was 20 mg/mL.

Subsequently, the anode catalytic layer slurry was applied on a side of an anode gas diffusion layer, and then the anode catalytic layer slurry was heated at a heating rate of 5 °C/min in a nitrogen atmosphere and was held at 350°C for 30 min to produce the hydrophobic anode catalytic layer. A loading of the anode catalyst was 5 mg/cm².

### (2) Preparation of Cathode Catalytic Layer

Raw materials for preparing the cathode catalytic layer included a cathode catalyst, a hydrophilic carbon material, a cathode ionomer, and a solvent. The cathode catalyst was molybdenum disulfide, the hydrophilic carbon material was carboxylated carbon nanotubes, the cathode ionomer was Alkymer ionomer, and the solvent was a mixed solution of ethanol and water. A volume ratio of ethanol to water was 1:1. A mass ratio of the cathode catalyst, the hydrophilic carbon material, and the cathode ionomer was 8:4:2 (i.e., 4:2:1).

**A** method for preparing the cathode catalytic layer included the following operations.

First, the cathode catalyst, the hydrophilic carbon material, the cathode ionomer, and the solvent were homogeneously mixed by a high-speed shearing to obtain a mixture. Particularly, a shearing rate is 10,000 rpm, a mixing duration is 30 min, and a shearing temperature was less than 5°C. Subsequently, an ultrasonic dispersion was performed on the mixture to obtain a cathode catalytic layer slurry. Particularly, an ultrasonic power was 100 W, and an ultrasonic duration was 30 min.

Subsequently, the cathode catalytic layer slurry was applied on a side of the anion exchange membrane to obtain a cathode catalytic layer. A loading of the cathode catalyst in the obtained cathode catalytic layer was 5 mg/cm².

### (3) Preparation of Water Electrolysis Membrane Electrode

The water electrolysis membrane electrode included a cathode gas diffusion layer, the above-mentioned cathode catalytic layer, an anion exchange membrane, the above-mentioned hydrophobic anode catalytic layer, and an anode gas diffusion layer, which were stacked in sequence. A thickness of the anion exchange membrane was 75µm.

A method for preparing the water electrolysis membrane electrode included the following operations. The cathode gas diffusion layer, the cathode catalytic layer, the anion exchange membrane, the hydrophobic anode catalytic layer, and the anode gas diffusion layer were stacked in sequence to obtain a layer assembly. A hot-pressing was performed on the layer assembly under a pressure of 300 psi at a temperature of 100°C for 15 minutes to produce the water electrolysis membrane electrode.

### Example 2

A water electrolysis membrane electrode was prepared in the present example according to the method from Example 1. Compared to Example 1, the difference lay specifically in: in the preparation of the hydrophobic anode catalytic layer, a feeding amount of polytetrafluoroethylene was adjusted such that the mass ratio of the anode catalyst, polytetrafluoroethylene, and the anode ionomer was 10:1:1.5. Apart from the aforementioned difference, all other raw materials, formulation ratios, and preparation operations in this example were strictly consistent with those in Example 1.

### Example 3

A water electrolysis membrane electrode was prepared in the present example according to the method from Example 1. Compared to Example 1, the difference lay specifically in: in the preparation of the hydrophobic anode catalytic layer, a feeding amount of polytetrafluoroethylene was adjusted such that the mass ratio of the anode catalyst, polytetrafluoroethylene, and the anode ionomer was 10:3: 1.5. Apart from the aforementioned difference, all other raw materials, formulation ratios, and preparation operations in this example were strictly consistent with those in Example 1.

### Example 4

A water electrolysis membrane electrode was prepared in the present example according to the method from Example 1. Compared to Example 1, the difference lay specifically in: in the preparation of the hydrophobic anode catalytic layer, a feeding amount of the anode ionomer was adjusted such that the mass ratio of the anode catalyst, polytetrafluoroethylene, and the anode ionomer was 10:1.5:1. Apart from the aforementioned difference, all other raw materials, formulation ratios, and preparation operations in this example were strictly consistent with those in Example 1.

### Example 5

A water electrolysis membrane electrode was prepared in the present example according to the method from Example 1. Compared to Example 1, the difference lay specifically in: in the preparation of the hydrophobic anode catalytic layer, a feeding amount of the anode ionomer was adjusted such that the mass ratio of the anode catalyst, polytetrafluoroethylene, and the anode ionomer was 10: 1.5:3. Apart from the aforementioned difference, all other raw materials, formulation ratios, and preparation operations in this example were strictly consistent with those in Example 1.

### Example 6

A water electrolysis membrane electrode was prepared in the present example according to the method from Example 1. Compared to Example 1, the difference lay specifically in: in the preparation of the hydrophobic anode catalytic layer, polytetrafluoroethylene in Example 1 is substituted by an equal amount of perfluoroethylene-propylene copolymer (FEP). Apart from the aforementioned difference, all other raw materials, formulation ratios, and preparation operations in this example were strictly consistent with those in Example 1.

### Example 7

A water electrolysis membrane electrode was prepared in the present example according to the method from Example 1. Compared to Example 1, the difference lay specifically in: in the preparation of the cathode catalytic layer, no hydrophilic carbon material is added. Apart from the aforementioned difference, all other raw materials, formulation ratios, and preparation operations in this example were strictly consistent with those in Example 1.

### Example 8

A water electrolysis membrane electrode was prepared in the present example according to the method from Example 1. Compared to Example 1, the difference lay specifically in: in the preparation of the cathode catalytic layer, a feeding amount of the hydrophilic carbon material and a feeding amount of the cathode ionomer were adjusted such that the mass ratio of the cathode catalyst, the hydrophilic carbon material, and the cathode ionomer was 8:2:5. Apart from the aforementioned difference, all other raw materials, formulation ratios, and preparation operations in this example were strictly consistent with those in Example 1.

### Example 9

A water electrolysis membrane electrode was prepared in the present example according to the method from Example 1. Compared to Example 1, the difference lay specifically in: in the preparation of the cathode catalytic layer, a feeding amount of the hydrophilic carbon material and a feeding amount of the cathode ionomer were adjusted such that the mass ratio of the cathode catalyst, the hydrophilic carbon material, and the cathode ionomer was 8:6: 1. Apart from the aforementioned difference, all other raw materials, formulation ratios, and preparation operations in this example were strictly consistent with those in Example 1.

### Example 10

A water electrolysis membrane electrode was prepared in the present example according to the method from Example 1. Compared to Example 1, the difference lay specifically in: in the preparation of the cathode catalytic layer, the carboxylated carbon nanotubes in Example 1 is substituted by an equal amount of carboxylated carbon black. Apart from the aforementioned difference, all other raw materials, formulation ratios, and preparation operations in this example were strictly consistent with those in Example 1.

### Comparative Example 1

A water electrolysis membrane electrode was provided in the present comparative example. The water electrolysis membrane electrode included a cathode gas diffusion layer, a cathode catalytic layer, an anion exchange membrane, an anode catalytic layer, and an anode gas diffusion layer, which are stacked in sequence.

### (1) Preparation of Cathode Catalytic Layer

The cathode catalytic layer was prepared according to the method for preparing the cathode catalytic layer in Example 1. Compared to Example 1, the difference lay specifically in: no hydrophilic carbon material was added in the raw materials. Apart from the aforementioned difference, all other raw materials, formulation ratios, and preparation operations in this example were strictly consistent with those in Example 1.

### (2) Preparation of Anode Catalytic Layer

**The** anode catalytic layer was prepared according to the method for preparing the hydrophobic anode catalytic layer in Example 1. Compared to Example 1, the difference lay specifically in: the hydrophobic material polytetrafluoroethylene was omitted in the raw materials. Apart from the aforementioned difference, all other raw materials, formulation ratios, and preparation operations in this example were strictly consistent with those in Example 1.

### (3) Preparation of Water Electrolysis Membrane Electrode

**It** was strictly consistent with that in Example 1.

### Comparative Example 2

A water electrolysis membrane electrode was prepared in the present comparative example according to the method from Example 1. Compared to Example 1, the difference lay specifically in: in the preparation of the anode catalytic layer, the hydrophobic material polytetrafluoroethylene is omitted. Apart from the aforementioned difference, all other raw materials, formulation ratios, and preparation operations in this example were strictly consistent with those in Example 1.

### Comparative Example 3

A water electrolysis membrane electrode was prepared in the present comparative example according to the method from Example 1. Compared to Example 1, the difference lay specifically in: in the preparation of the hydrophobic anode catalytic layer, a feeding amount of the hydrophobic material polytetrafluoroethylene was adjusted such that the mass ratio of the anode catalyst, polytetrafluoroethylene, and the anode ionomer was 10:0.5:4. Apart from the aforementioned difference, all other raw materials, formulation ratios, and preparation operations in this example were strictly consistent with those in Example 1.

### Comparative Example 4

A water electrolysis membrane electrode was prepared in the present comparative example according to the method from Example 1. Compared to Example 1, the difference lay specifically in: in the preparation of the hydrophobic anode catalytic layer, a feeding amount of polytetrafluoroethylene was adjusted such that the mass ratio of the anode catalyst, polytetrafluoroethylene, and the anode ionomer was 10:4:1.5. Apart from the aforementioned difference, all other raw materials, formulation ratios, and preparation operations in this example were strictly consistent with those in Example 1.

### Test Example

### Test Objects

The water electrolysis membrane electrodes obtained in Examples 1-10 and Comparative Examples 1-4 were assembled with cathode plates (with flow fields), anode plates (with flow fields), end plates, and insulating plates respectively to form water electrolyzers. The obtained water electrolyzers were used as test objects.

### Test Items and Test Methods

(1) Porosity: The anode catalytic layer in the water electrolysis membrane electrode was peeled off by tape. The porosity of the anode catalytic layer was tested referring to a test method in "GB/T 21650.1-2008 Mercury intrusion porosimetry and gas adsorption methods for the determination of pore size distribution and porosity of solid materials. Part 1: mercury intrusion porosimetry". In the present test example, a porosity between 10% and 40% indicated a qualified test result, and a porosity between 20% and 30% indicated a good test result.
(2) Ohmic impedance: The cathode plate was connected to a working electrode wire WE and a working sensing electrode wire WS of an electrochemical workstation, and the anode plate was connected to a reference electrode wire RE and an auxiliary electrode wire CE of the electrochemical workstation. The test objects were tested for a constant-voltage alternating-current impedance at an open-circuit potential. Particularly, a high frequency was set to 100000 Hz, a low frequency to 1 Hz, and an amplitude to 10 mV. After test results were fitted, the ohmic impedance (HFR) value was recorded.
(3) Water Electrolysis Performance of Electrolyzer: The cathode plate was connected to the working electrode wire WE and the working sensing electrode wire WS of the electrochemical workstation, and the anode plate was connected to the reference electrode wire RE and the auxiliary electrode wire CE of the electrochemical workstation. According to a constant-current test method, under a current of 0 A/cm²-1 A/cm², 10 current steps were set, each test object was tested at each step for 10 s, one voltage value was recorded per second, and an average voltage value at each current step was recorded.
(4) Water Content: According to a test method in "GB/T 5832.2-2016 Gas analysis Determination of trace moisture Part 2: dew-point method", after the test object worked stably, produced hydrogen was collected for a water content test, and a hydrogen dew point was recorded. In the present test example, a hydrogen dew point lower than -2.5°C (an absolute humidity was lower than 4 g/m³ at 0°C and 1 bar) indicated a qualified test result.

Test results: Raw material compositions and test results of the test objects in the present test example are shown in Table 1 and Table 2.

**Table 1. raw material compositions of the test objects in the present test example**

| group | hydrophobic anode catalytic layer | | | cathode catalytic layer | |
|---|---|---|---|---|---|
| | anode catalyst: hydrophobic material: anode ionomer | hydrophobic material | porosity | cathode catalyst: hydrophilic carbon material: cathode ionomer | hydrophilic carbon material |
| Ex. 1 | 10:1.5:1.5 | polytetrafluoroethylene | good | 8:4:2 | carboxylated carbon nanotube |
| Ex. 2 | 10:1:1.5 | polytetrafluoroethylene | good | 8:4:2 | carboxylated carbon nanotube |
| Ex. 3 | 10:3:1.5 | polytetrafluoroethylene | qualified | 8:4:2 | carboxylated carbon nanotube |
| Ex. 4 | 10:1.5:1 | polytetrafluoroethylene | qualified | 8:4:2 | carboxylated carbon nanotube |
| Ex. 5 | 10:1.5:3 | polytetrafluoroethylene | qualified | 8:4:2 | carboxylated carbon nanotube |
| Ex. 6 | 10:1.5:1.5 | perfluoroethylene-propylene copolymer | good | 8:4:2 | carboxylated carbon nanotube |
| Ex. 7 | 10:1.5:1.5 | polytetrafluoroethylene | good | 8:0:2 | carboxylated carbon nanotube |
| Ex. 8 | 10:1.5:1.5 | polytetrafluoroethylene | good | 8:2:5 | carboxylated carbon nanotube |
| Ex. 9 | 10:1.5:1.5 | polytetrafluoroethylene | good | 8:6:1 | carboxylated carbon nanotube |
| Ex. 10 | 10:1.5:1.5 | polytetrafluoroethylene | good | 8:4:2 | carboxylated carbon black |
| Comp. Ex. 1 | 10:0:1.5 | / | unqualified | 8:0:2 | carboxylated carbon nanotube |
| Comp. Ex. 2 | 10:0:1.5 | / | unqualified | 8:4:2 | carboxylated carbon nanotube |
| Comp. Ex. 3 | 10:0.5:4 | polytetrafluoroethylene | unqualified | 8:4:2 | carboxylated carbon nanotube |
| Comp. Ex. 4 | 10:4:1.5 | polytetrafluoroethylene | unqualified | 8:4:2 | carboxylated carbon nanotube |

**Table 2. test results of the test objects in the present test example**

| group | HFR (mΩ*cm²) | CP voltage (V@0.5A/cm²) | CP voltage (V@1A/cm²) | water content |
|---|---|---|---|---|
| Ex. 1 | 185±5 | 1.75±0.01 | 1.90±0.01 | qualified |
| Ex. 2 | 189±7 | 1.76±0.02 | 1.93±0.02 | qualified |
| Ex. 3 | 299±3 | 1.79±0.02 | 1.97±0.01 | qualified |
| Ex. 4 | 259±1 | 1.76±0.01 | 1.94±0.01 | qualified |
| Ex. 5 | 277±3 | 1.78±0.01 | 1.96±0.01 | qualified |
| Ex. 6 | 191±2 | 1.76±0.02 | 1.92±0.01 | qualified |
| Ex. 7 | 209±3 | 1.77±0.02 | 1.92±0.02 | qualified |
| Ex. 8 | 195±6 | 1.78±0.01 | 1.98±0.01 | qualified |
| Ex. 9 | 189±4 | 1.78±0.02 | 1.95±0.03 | qualified |
| Ex. 10 | 187±1 | 1.76±0.02 | 1.92±0.02 | qualified |
| Comp. Ex. 1 | 339±1 | 1.80±0.01 | 2.01±0.01 | unqualified |
| Comp. Ex. 2 | 257±4 | 1.79±0.01 | 2.00±0.01 | unqualified |
| Comp. Ex. 3 | 295±6 | 1.78±0.02 | 1.99±0.01 | unqualified |
| Comp. Ex. 4 | 395±2 | 1.79±0.02 | 1.99±0.02 | qualified |

### Analysis of Results:

Comparing performance indicators of Examples 1-10 and Comparative Examples 1-4 in Table 2, it can be found that, in contrast to the water electrolyzers of Comparative Examples 1-4, in Examples 1-10, the hydrophilicity and hydrophobicity as well as the porosity of the anode catalytic layer of the water electrolysis membrane electrode were adjusted, and the cathode catalytic layer played a role on water retaining. Thus, the water electrolyzers prepared with the water electrolysis membrane electrodes in Examples 1-10 had higher gas diffusion and ion transport efficiencies, lower water electrolyzer voltages, and the produced hydrogen contained less moisture.

Comparative Examples 1-2 were carried out with reference to Example 1. By comparing the performance indicators between Example 1 and Comparative Examples 1-2 in Table 2, it can be found that, the water electrolyzer in Example 1 had lower ohmic impedance, and the water content in the produced hydrogen was also lower. Therefore, it indicates that the water electrolysis membrane electrode with the hydrophobic anode catalytic layer could not only accelerate gas mass transfer and ion transport, reduce ohmic impedance, lower the water electrolyzer voltage, but also improve the purity of the produced hydrogen and reduce the water content in the produced hydrogen.

By comparing the performance indicators of Examples 1-5 and Comparative Examples 3-4 in Table 2, it can be found that, as a proportion of the hydrophobic material in the hydrophobic anode catalytic layer increased and/or a proportion of the anode ionomer increased, the porosity and hydrophobicity of the hydrophobic anode catalytic layer were regulated, and the ohmic impedance increased correspondingly, resulting in a corresponding increase in the water electrolyzer voltage. By adjusting the raw material ratio in the hydrophobic anode catalytic layer, the porosity of the hydrophobic anode catalytic layer could be regulated. When the mass ratio of the anode catalyst, the hydrophobic material, and the anode ionomer in the hydrophobic anode catalytic layer fell within 10:1-3:1-3, the hydrophobic anode catalytic layer had appropriate porosity, hydrophilicity, and hydrophobicity, and the water electrolyzer showed better water electrolysis performance, and the produced hydrogen had high purity and low water content. When the porosity of the hydrophobic anode catalytic layer fell within 10%-40%, the water electrolyzer showed better comprehensive performance. When the porosity of the hydrophobic anode catalytic layer fell within 20%-30%, the water electrolyzer had lower ohmic impedance.

By comparing the comprehensive performance of Example 1 and Example 7, it can be found that, the ohmic impedance corresponding to Example 1 was lower than that corresponding to Example 7. This is because the hydrophilic cathode catalytic layer combined with the hydrophobic anode catalytic layer was adopted in Example 1, which could control a permeation amount of water molecules from the anode side to the cathode side and was beneficial for the water electrolyzer to realize the liquid supply circulation on the anode side, thereby keeping the membrane electrode wet, improving ion transport efficiency and electrolysis efficiency, and producing drier hydrogen.

The above-mentioned embodiments are only used to illustrate the technical solutions of the present disclosure rather than limit the protection scope of the present disclosure. Although the present disclosure has been described in detail with reference to the preferred embodiments, those of ordinary skill in the art should understand that the technical solutions of the present disclosure can be modified or equivalently replaced without departing from the essence and scope of the technical solutions of the present disclosure.

## Claims

1. A water electrolysis membrane electrode, **characterized in that** the water electrolysis membrane electrode comprises a cathode gas diffusion layer, a cathode catalytic layer, an anion exchange membrane, a hydrophobic anode catalytic layer, and an anode gas diffusion layer that are stacked in sequence;
wherein raw materials for preparing the hydrophobic anode catalytic layer comprises an anode catalyst, a hydrophobic material, and an anode ionomer, a mass ratio of the anode catalyst, the hydrophobic material, and the anode ionomer is 10:1-3:1-3, and a porosity of the hydrophobic anode catalytic layer is 10%-40%.

2. The water electrolysis membrane electrode as claimed in claim 1, wherein the hydrophobic material comprises at least one selected from the group consisting of polytetrafluoroethylene, polyvinylidene fluoride, and perfluoroethylene-propylene copolymer.

3. The water electrolysis membrane electrode as claimed in any one of claims 1-2, wherein the porosity of the hydrophobic anode catalytic layer is 20%-30%.

4. The water electrolysis membrane electrode as claimed in any one of claims 1-3, wherein a method for preparing the hydrophobic anode catalytic layer comprising:
mixing the raw materials for preparing the hydrophobic anode catalytic layer to obtain an anode catalytic layer slurry;
applying the anode catalytic layer slurry on a side of the anode gas diffusion layer; and
calcining the anode catalytic layer slurry on the side of the anode gas diffusion layer at a temperature of 300°C -500°C to produce the hydrophobic anode catalytic layer.

5. The water electrolysis membrane electrode as claimed in any one of claims 1-4, wherein a loading of the anode catalyst in the hydrophobic anode catalytic layer is 1 mg/cm2-10 mg/cm2; and
the anode catalyst comprises at least one selected from the group consisting of iridium oxide, ruthenium dioxide, a nickel-iron layered double hydroxide, a nickel-iron oxide, a nickel-iron alloy, and a nickel-iron-cobalt alloy.

6. The water electrolysis membrane electrode as claimed in any one of claims 1-5, wherein raw materials for preparing the cathode catalytic layer comprises a cathode catalyst, a hydrophilic carbon material, and a cathode ionomer; and
a mass ratio of the cathode catalyst, the hydrophilic carbon material, and the cathode ionomer is 8:2-6: 1-5.

7. The water electrolysis membrane electrode as claimed in claim 6, wherein the hydrophilic carbon material comprises at least one of a carboxylated carbon material and an aminated carbon material.

8. The water electrolysis membrane electrode as claimed in any one of claims 6-7, wherein a loading of the cathode catalyst in the cathode catalytic layer is 1 mg/cm2-10 mg/cm2; and
the cathode catalyst comprises at least one selected from the group consisting of a platinum-carbon catalyst, a nickel-phosphorus catalyst, a nickel-molybdenum alloy, a nickel-manganese alloy, a nickel-molybdenum oxide, a nickel-manganese oxide, and molybdenum disulfide.

9. The water electrolysis membrane electrode as claimed in any one of claims 6-8, wherein the cathode ionomer comprises at least one selected from the group consisting of Alkymer ionomer, Fumasep ionomer, Ionomr ionomer, Versogen ionomer, and Sustainion ionomer.

10. The water electrolysis membrane electrode as claimed in claim 4, wherein in the anode catalytic layer slurry, a concentration of the anode catalyst is 10 mg/mL-30 mg/mL.

11. The water electrolysis membrane electrode as claimed in any one of claims 1-10, wherein a contact angle of the hydrophobic anode catalytic layer is greater than 90°.

12. The water electrolysis membrane electrode as claimed in any one of claims 1-11, wherein the anode ionomer comprises at least one selected from Alkymer ionomer, Fumasep ionomer, Ionomr ionomer, Versogen ionomer, and Sustainion ionomer.

13. The water electrolysis membrane electrode as claimed in any one of claims 1-12, wherein the raw materials for preparing the hydrophobic anode catalytic layer further comprise a solvent, and the solvent comprises at least one of ethanol and water.

14. A method for preparing the water electrolysis membrane electrode as claimed in any one of claims 1-13, **characterized in that** the method comprises:
stacking the cathode gas diffusion layer, the cathode catalytic layer, the anion exchange membrane, the hydrophobic anode catalytic layer, and the anode gas diffusion layer sequentially to obtain a layer assembly; and
performing a hot pressing on the layer assembly under a pressure of 100 psi-600 psi at a temperature of 50°C-150°C to produce the water electrolysis membrane electrode.

15. A water electrolyzer, **characterized in that** the water electrolyzer comprises the water electrolysis membrane electrode as claimed in any one of claims 1-13.
